Europäisches Patentamt

European Patent Office

Office européen des brevets

(19)

(11) Publication number : **0 402 365 B1**

# (12) EUROPEAN PATENT SPECIFICATION

(45) Date of publication of patent specification :
09.09.92 Bulletin 92/37

(51) Int. Cl.⁵ : **F16L 59/02**

(21) Application number : **89901562.2**

(22) Date of filing : **23.01.89**

(86) International application number :
**PCT/FI89/00012**

(87) International publication number :
**WO 89/07732 24.08.89 Gazette 89/20**

(54) **AN APPARATUS FOR CURING INSULATING CHUTES.**

(30) Priority : **12.02.88 FI 880667**

(43) Date of publication of application :
**19.12.90 Bulletin 90/51**

(45) Publication of the grant of the patent :
**09.09.92 Bulletin 92/37**

(84) Designated Contracting States :
**AT BE CH DE FR GB IT LI LU NL SE**

(56) References cited :
**DE-A- 1 525 860**
**DE-A- 1 779 712**
**US-A- 2 778 759**

(73) Proprietor : **OY PARTEK AB**
**SF-21600 Parainen (FI)**

(72) Inventor : **SOIKKELI, Osmo**
**Mäntyläntie 14**
**SF-53650 Lappeenranta (FI)**

(74) Representative : **Patentanwälte RUFF, BEIER**
**und SCHÖNDORF**
**Neckarstrasse 50**
**W-7000 Stuttgart 1 (DE)**

## Description

An apparatus for curing insulating chutes The present invention relates to an apparatus for curing insulating chutes, comprising a two-part mould and means for applying curing air through the mould and through an insulating chute preform arranged around a core disposed in the mould.

The prior art disclosed above is represented by US-A-2 778 759 and DE-A-1 525 860.

Further a device for producing window frames is known (DE-A-17 79 712). The shape of the window frames is unsymmetrical. The mould is divided into a male part and a female part. The division between both parts occurs at an area of the cross section in which the dimension of the cross-section increases steeply. Whether or not burrs may occur is not mentioned.

A disadvantage of the apparatus known from the prior art is the formation of burrs on the outer surface of the cylindrical chute at the junction plane of the mould halves. The halves cannot fully make contact with each other because of burrs formed by the wool spreading between the planes.

The object of the invention is to provide a new apparatus for curing insulating chutes without the formation of such burrs.

For achieving this object the invention proposes an apparatus with the features of claim 1.

Preferably each leading edge of the male part is sharp and flexible, whereas straight guide surfaces of the female part extend straight from the diametrical plane of the insulating chute towards the male part and terminate in a widening receiving opening, the flexible leading edge of the male part being arranged to come into contact with the innner surface of the female part within the area of said widening receiving opening.

Since the leading edge of the male part slides along the inner surface of the female part in close contact therewith, no opening enabling the formation of a burr during the curing is left between the mould parts.

With large insulating chutes generally having an inner diameter of 90 mm or more, it is preferable to use a perforated core and apply curing air from each one of the mould parts through the insulating chute preform into the core cavity, or vice versa.

With small insulating chutes generally having an inner diameter less than 90 mm, it is preferable to use a solid core and apply curing air from one mould part through the insulating chute preform into the other mould part.

In the following the invention will be described with reference to the attached schematical drawing.

Figure 1 shows a mould in an open position.

Figure 2 shows the mould in a partially closed position.

Figure 3 shows the mould in a closed position.

The reference numeral 1 indicates the male part of the curing mould; the reference numeral 2 indicates the female part of the mould; 3 indicates a core; and 4 indicates an insulating chute preform arranged around the core. Both the male part 1 and the female part 2 comprise a perforated inner surface semi-cylindrical in shape.

The male part 1 preferably comprises a sharp flexible leading edge 5, whereas the inner surface of the female part 2 extends from the diametral plane of the semi-cylinder towards the male part preferably in the form of a straight guide surface 6 terminating in a widening receiving opening 7.

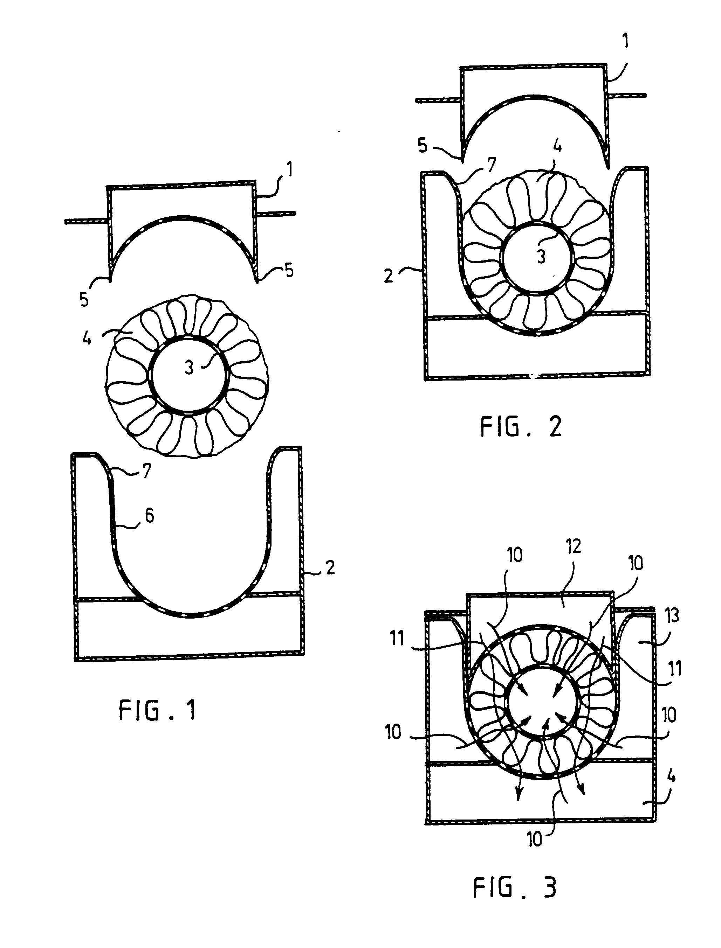

The core 3 with the insulating chute preform 4, supported e.g. at the ends thereof by a transporter, is brought to the open mould to a position shown in Figure 1. The female part 2 of the mould is lifted to a position shown in Figure 2, whereafter the male part 1 of the mould is lowered to the position shown in Figure 3.

The flexible leading edges 5 of the male part 1 preferably first come into contact with the inner surface of the receiving opening 7 in the female part 2 and slide onwards along the guide surface 6, being pressed against the guide surface until the preform 4 makes contact with the semi-cylindrical surface of the male part 1. The leading edges 5 of the male part thereby extend approximately up to the diametral plane of the semi-cylindrical surface of the female part.

If, as in the specific case of the drawing, the insulating chute is large, that is, its inner diameter is generally at least about 90 mm, the core 3 to be used is perforated and curing air is applied through each one of the hollow mould parts 1 and 2 through the insulating chute preform 4 into the internal cavity of the core 3, arrows 11 in Figure 3. With a small chute, it is preferable to use a solid core and to apply curing air e.g. from a cavity 12 in the male part 1 through the chute preform 4 into a cavity 14 in the female part 2 of the mould. In this case, the female part 2 of the mould is preferably divided into two cavities 13 and 14, whereby the air pressure in the cavities 13 is atmospheric.

## Claims

1. An apparatus for curing cylindrical insulating chutes, comprising a two-part mould (1, 2) and means for applying curing air through the mould (1, 2) and through a cylindrical insulating chute preform (4) disposed in said mould (1, 2), characterized in that the two-part mould (1, 2) comprises
    a male mold part (1) having a generally semi-cylindrical inner surface terminating on both longitudinal sides in a leading edge (5) and
    a female mould part (2) for accomodating said chute preform (4) therein, said male mould part being insertable into said female mold part, said female mold part having an inner surface comprising a generally semi-cylindrical portion which on both longitudinal sides continues in a guide surface (6) for closely contacting the leading edges (5) of said male mold part prior to the mold being in the closed position.

2. An apparatus according to claim 1, characterized in that each leading edge (5) of the male mold part (1) is sharp and flexible.

3. An apparatus acccording to claim 1 or 2, characterized in that the guide surfaces (6) extend straight towards the male part (1) and terminate in a widening receiving opening (7) for the leading edges (5) of the male mould part (1).

4. An apparatus according to claim 2 and 3, characterized in that each flexible leading edge (5) of the male part (1) is arranged to come into contact with the inner surface of the female part within the area of said widening receiving opening (7).

5. An apparatus according to one of the claim 1 to 4 for large insulating chutes, characterized in that curing air (10) is arranged to be applied from each one of the mould parts (1, 2) into the interior of the mould or vice versa.

6. An apparatus according to one of the claims 1 to 4 for small insulating chutes, characterized in that curing air (11) is arranged to be applied from one mould part (1, 2) through the interior of the mould into the other mould part (2, 1).

## Patentansprüche

1. Vorrichtung zum Aushärten zylindrischer Isolierrohre, enthaltend eine zweiteilige Form (1, 2) sowie Mittel zum Anlegen von Aushärtluft durch die Form (1, 2) und durch eine in der Form (1, 2) angeordnete zylindrische Isolierrohrvorform (4), dadurch gekennzeichnet, daß die zweiteilige Form (1, 2) enthält
einen männlichen Formteil (1) mit einer etwa halbzylindrischen inneren Oberfläche, die an beiden Längsseiten in einer Vorderkante (5) endet, und
einen weiblichen Formteil (2) zum Unterbringen der Rohrvorform (4) darin, wobei der männliche Formteil in den weiblichen Formteil einsetzbar ist und der weibliche Formteil eine innere Oberfläche aufweist, die einen etwa halbzylindrischen Abschnitt enthält, der an beiden Längsseiten sich in eine Führungsoberfläche (6) zum dichten Berühren der vorderen Kanten (5) des männlichen Formteils fortsetzt, bevor die Form in geschlossener Position ist.

2. Vorrichtung nach Anspruch 1, dadurch gekennzeichnet, daß jede Vorderkante (5) des männlichen Formteils (1) scharf und flexibel ist.

3. Vorrichtung nach Anspruch 1 oder 2, dadurch gekennzeichnet, daß die Führungsoberfläche (6) sich gerade in Richtung auf den männlichen Teil (1) erstrecken und in einer sich erweiternden Aufnahmeöffnung (7) für die Vorderkanten (5) des männlichen Formteils (1) enden.

4. Vorrichtung nach Anspruch 2 oder 3, dadurch gekennzeichnet, daß jede flexible Vorderkante (5) des männlichen Teils (1) derart angeordnet ist, daß sie in Kontakt mit der inneren Oberfläche des weiblichen Teils innerhalb des Bereichs der sich erweiternden Aufnahmeöffnung (7) gelangt.

5. Vorrichtung nach einem der Ansprüche 1 bis 4 für große Isolierrohre, dadurch gekennzeichnet, daß die Anordnung derart getroffen ist, daß Aushärtluft (10) von jedem der Formteile (1, 2) in das Innere der Form oder umgekehrt angelegt wird.

6. Vorrichtung nach einem der Ansprüche 1 bis 4 für kleine Isolierrohre, dadurch gekennzeichnet, daß die Anordnung derart getroffen ist, daß Aushärtluft (11) von einem Formteil (1, 2) durch das Innere der Form in den anderen Formteil (2, 1) angelegt wird.

## Revendications

I. Dispositif pour le traitement des goulottes isolantes cylindriques, comprenant un moule en deux parties (I, 2) et des moyens servant à faire passer de l'air de traitement à travers le moule (I, 2) et à travers une préforme de goulotte isolante cylindrique (4) disposée dans ledit moule (I, 2), caractérisé en ce que le moule en deux parties (I, 2) comprend
une partie de moule mâle (I) ayant une surface intérieure de forme générale semi-cylindrique qui se termine par un bord avant (5) sur chacun de ses deux côtés longitudinaux, et
une partie de moule femelle (2) destinée à recevoir intérieurement ladite préforme de goulotte (4), ladite partie mâle du moule pouvant être engagée dans ladite partie de moule femelle, ladite partie de moule femelle ayant une surface intérieure qui comprend une portion de forme générale semi-cylindrique qui se prolonge, sur chacun de ses côtés longitudinaux, par une surface de guidage (6) destinée à entrer en contact étroit avec les bords avant (5) de ladite partie de moule mâle avant que le moule ne soit en position fermée.

2. Dispositif selon la revendication I, caractérisé en ce que chaque bord avant de la partie de moule mâle (I) est effilé et flexible.

3. Dispositif selon la revendication I ou 2, caractérisé en ce que les surfaces de guidage (6) s'étendent en ligne droite vers la partie de moule mâle (I) et se termine par une ouverture de réception évasée (7) qui reçoit les bords avant (5) de la partie de moule mâle (I).

4. Dispositif selon les revendications 2 et 3, caractérisé en ce que chaque bord avant flexible (5) de la partie mâle (I) est calculé pour entrer en contact avec la surface intérieure de la partie femelle dans la section de l'ouverture de réception évasée (7).

5. Dispositif selon une des revendications I à 4, pour goulottes isolantes de grande taille, caractérisé en ce qu'il est tel que l'air de traitement (I0) soit envoyé de chacune des parties (I, 2) du moule dans le volume intérieur du moule ou vice versa.

6. Dispositif selon une des revendications I à 4, pour goulottes isolantes de petite taille, caractérisé en ce qu'il est tel que l'air de traitement (II) soit envoyé d'une partie (I, 2) du moule dans l'autre partie (2, I) du moule en traversant l'intérieur du moule.

FIG . 1

FIG . 2

FIG . 3